# EUROPEAN PATENT SPECIFICATION

(11) **EP 1 692 943 B1**
(45) Date of publication and mention of the grant of the patent: **03.06.2009**
(21) Application number: 05003515.3
(22) Date of filing: 18.02.2005
(51) Int. Cl.: A23G 3/00

(54) **Centre fill confectionery products**
Gefüllte Süsswaren
Dragées fourrées

(43) Date of publication of application: 23.08.2006
(73) Proprietor: THE PROCTER & GAMBLE COMPANY, Cincinnati, Ohio 45202 (US)
(72) Inventor: Lorenzi, Marc Paul, Egham, Surrey, TW20 8HG (GB)
(74) Representative: Clemo, Nicholas Graham

(56) References cited:
- WO-A-01/82715
- DE-A1- 2 343 755
- US-A- 4 344 972
- US-A- 4 372 942
- US-A- 4 466 983
- US-B1- 6 306 429

## Description

### FIELD OF THE INVENTION

The present invention relates to centre-fill confectionery compositions. More specifically the present invention relates to hard boiled candies comprising shear thinning centre-fill compositions providing rheological attributes that improve the stability of the confectionery and the perception and length of residence of the centre-fill in the oral cavity.

### BACKGROUND OF THE INVENTION

Unless otherwise stated herein, all percentages are weight percentages.

Unless otherwise stated herein, all measurements are taken at 25°C.

Centre-fill confectionery products have been available for many years. These products usually take the form of hard boiled candies in which a cavity or core has been left, and into whose void a filling is injected. The candy shell of such products can be either sugar (glucose and/or sucrose) or sugar-replacement based (e.g. isomalt^{®} and/or maltitol).

The centre-fill composition has traditionally been based upon a bulk sweetener such as glucose syrup with water, flavours and colours. Alternative fills have included edible liquids such as glycerin in place of water to improve stability by preventing solubilisation of the candy shell. Whilst some of these compositions improve the stability of the centre-filled confectionery, none combines the attributes of stability upon storage with consumer-acceptable aesthetics and improved flavour perception in the oral cavity. US4316915 discloses centre-filled chewing gums comprising a liquid centre-fill comprising a thickener designed to remain liquid upon storage. These centre-fills are not ideal for use in centre-filled hard boiled candies as by remaining liquid upon storage they can adversely affect the stability of the composition by solubilising the candy shell, and subsequent recrystallisation, resulting in opacity and brittleness,

Some centre-fill compositions of the prior art have typically been found to be too thin i.e, too liquid, such that when a consumer eats the confectionery, the centre-fill is quickly dissolved in the mouth and ingested, not having a prolonged retention time in the oral cavity. Furthermore, attempts to alter the rheology of the centre-fill have resulted in centre-fills that do not disperse easily within the oral cavity. Such attempts have also resulted in production process issues whereby injection of the centre-fill is difficult, resulting in frequent leakage from the candy mass and contamination of the production line. This also results in poor stability if the finished candy cracks during stability resulting in leakage in the finished pack.

A need exists in the art to provide centre-fill confectionery compositions that are stable upon storage, impart a feeling of liquidity to the consumer, but are retained in the oral cavity to improve perception of flavours and delivery of active ingredients therein.

### SUMMARY OF THE INVENTION

The present invention provides confectionery compositions comprising from 60% to 95% hard boiled candy shell and from 5% to 40% filling, by weight of the composition, the filling comprising
a. a polar edible liquid; and
b. from 0.001% to 10% thiohomer by weight of the filling
c. less than 8% water
wherein the centre fill composition is shear-thinning. The compositions herein have improved stability, and improved oral retention enabling improved flavour perception by the consumer whilst appearing as a free flowing liquid upon consumption.

### DETAILED DESCRIPTION OF THE INVENTION

The confectionery compositions of the present invention comprise from about 60 to about 95% preferably from about 70 to about 85%, of a hard boiled candy shell and from about 5 to about 40%, preferably from about 15 to about 30%, of an edible filling, by weight of the composition.

The filling of the present invention comprises a polar edible liquid. As used herein "polar edible liquid" includes materials that are liquid at room temperature (25°C), polar in nature at the molecular level (i.e. have "positive" and "negative" poles dependent upon the electrostatic nature of the atoms that constitute the molecule) and are edible (i.e. that have no known toxicological side-effects and are sanctioned for use in human foods and medicine). Non-limiting examples of polar edible liquids useful herein include water, low molecular weight alcohols, polyhydric alcohols and mixtures thereof, preferably polyhydric alcohols. Non-limiting examples of polyhydric alcohols suitable for use herein include glycerin, low molecular weight (i.e. less than 1000MW) polyethylene glycols, propylene glycol and mixtures thereof, preferably glycerin. The filling of the present invention preferably comprises from about 30% to about 95% polar edible liquid or mixtures thereof by weight of the filling, more preferably from about 40% to about 90% and more preferably still from about 50% to about 85%, even more preferably still from about 40% to about 60% by weight of the filling.

The filling is a low water content or non-aqueous filling comprising water at a level of less than 8% more preferably still 6% or less water by weight of the filling. Without wishing to be bound by theory, it is believed that high levels of water may adversely affect the stability of the filling when comprised within the hard candy shell due to the solublisation and subsequent recrystallisation of sugars or sugar alcohols within the candy shell. This results in the filling becoming hard and crystalline, as well as the shell becoming opaque and susceptible to breakage.

The filling may further comprise a bulk sweetener, non-limiting examples of which include glucose and sucrose, to improve the palatability of the filling. Fillings may comprise from about 5 to 80%, preferably from about 30 to about 75% on a dry solids basis by weight of the bulk sweetener. A preferred source of the sweetener is high fructose corn syrup which, being commercially available as an 80% solids of which the balance is essentially water, can also provide some, or even all, of the water required by aqueous fillings, when employed. Sugar free compositions comprising a sugar alcohol such as sorbitol, xylitol isomalt or maltitol can also be used in combination with artificial or natural high intensity sweeteners; non-limiting examples of high intensity sweeteners are sodium saccharin, potassium acesulfame, aspartame and sucralose.

The confectionery compositions herein comprise a filling composition that is shear thinning. Preferably the centre fill composition exhibits a log [(η @ 0.01s⁻¹)/ (η @ 250s⁻¹)] greater than about 0.5 at 37°C, measured according to the method set out below. Preferably the log [(η @ 0.01s⁻¹)/ (η @ 250s⁻¹)] ratio is greater than about 1, more preferably greater than about 5. The optimal centre fill should display a very high viscosity at low or zero shear but show a dramatic drop in viscosity when subjected to high shear rates. Without wishing to be bound by theory, it is believed that the shear thinning centre fills used herein provide multiple benefits for the confectionery composition. Firstly, it is believed that the shear thinning properties of the centre fill allow it to become semi-solid or solid following manufacture, cooling and storage. This slows the transfer of chemicals from the center fill to the shell, and thus improves the stability of the composition, avoiding problems such as liquid leakage through the candy shell and solubilisation of the candy shell that can cause the shell to recrystallise or become soft due to the permeation of the polar edible liquid from the fill.

However, solid fillings are not as consumer acceptable as liquid ones. Therefore, it is required that the filling displays shear thinning properties to allow it to reduce its viscosity substantially upon consumption as the consumer sucks the confectionery, and moves it around their mouth with their tongue, applying increased shear stress. This shear stress thins the centre fill upon release resulting in an impression of liquidity. However, it has been discovered that truly liquid centre fills (i.e. those not incorporating a thickener according to the present invention) do not deliver consumer acceptable consumption aesthetics. Specifically, truly liquid centre fills are quickly diluted in saliva, ingested and removed from the oral cavity rapidly. As a result, any flavours, sensates or active ingredients comprised within the centre fill are rapidly removed from the oral cavity, leading to reduced perception of activity or flavour. Without wishing to be bound by theory it is also believed that the shear-thinning fillings herein act as muco-adherents, coating the centre fill over the oral mucosa, improving the residence time of the fill within the oral cavity. This has manifold advantages, including improving the imparted feeling on the oral cavity by coating it with thickened liquid, and ensuring that there is center fill remaining with the candy shell pieces after the shell has been breached. Furthermore, perception of flavours and active ingredients is increased as the major mucosal surfaces (e.g. tongue, throat and buccal surfaces) are exposed to these ingredients for a prolonged time.

In order to achieve such shear thinning properties, the confectionery compositions of the present invention further comprise a thickener. To achieve the above attributes, the thickener should impart a high degree of pseudoplasticity to the filling, causing it to significantly decrease in viscosity as the shear rate is increased and also display muco-adherent properties. Polymeric thickeners which induce pseudoplasticity in the said formulations are preferred. Polymeric thickeners are generally high molecular weight materials which are straight chained or branched, they may also form cross-linked networks when hydrated. Shear thinning or pseudoplastic polymers impart a high viscosity when dissolved or dispersed in a polar liquid, and show a significant drop in viscosity under increased shear strain or shear rate.

Thickeners for use herein must be suitable for human consumption. Non-limiting examples of suitable thickeners include xanthan gum, carrageenan and derivatives, gellan gum, hydroxypropyl methyl cellulose, sclerotium gum and derivatives, pullulan, rhamsan gum, welan gum, konjac, curdlan, carbomer, algin, alginic acid, alginates and derivatives, hydroxyethyl cellulose and derivatives, hydroxypropyl cellulose and derivatives, starch phosphate derivatives, guar gum and derivatives, starch and derivatives, co-polymers of maleic acid anhydride with alkenes and derivatives, ethylene glycol/propylene glycol co-polymers, long chain alcohols such as behenyl alcohol, poloxamers and derivatives, polyacrylates and derivatives, methyl cellulose and derivatives, ethyl cellulose and derivatives, agar and derivatives, gum arabic and derivatives, pectin and derivatives, chitosan and derivatives, high molecular weight polyethylene glycols such as polyethylene glycols (molecular weight 10,000 and above), karaya gum, locust bean gum, natto gum, co-polymers of vinyl pyrollidone with alkenes, tragacanth gum, polyacrylamides, chitin derivatives, gelatin, betaglucan, dextrin, dextran, cyclodextrin, methacrylates, microcrystalline cellulose, polyquaterniums, furcellaren gum, ghatti gum, psyllium gum, quince gum, tamarind gum, larch gum, tara gum, talc, kaolin clay, bentonite clay, cellulose, fumed silica and mixtures thereof. Preferred are xanthan gum, carrageenan and derivatives, gellan gum, hydroxypropyl methyl cellulose, sclerotium gum and derivatives, pullulan, rhamsan gum, welan gum, konjac, curdlan, carbomer, algin, alginic acid, alginates and derivatives, hydroxyethyl cellulose and derivatives, hydroxypropyl cellulose and derivatives, starch phosphate derivatives, guar gum and derivatives, starch and derivatives, co-polymers of maleic acid anhydride with alkenes and derivatives, cellulose gum and derivatives, poloxamers and derivatives, polyquaterniums and mixtures thereof. More preferred are xanthan gum, carrageenan and derivatives, gellan gum, hydroxypropyl methyl cellulose, polyquatemiums and mixtures thereof, more preferably still xantham gum.

The filling compositions of the present invention comprise from 0.001 % to 10% thickener by weight of the fill. More preferably, the fill comprises the thickener at levels of from about 0.01% to about 5%, more preferably still from about 0.01% to less than 0.8%, and even more preferably still from about 0.01% to less than about 0.5%.

The log viscosity ratio value at a fixed temperature, i.e., log [(η @ 0.01s⁻¹)/ (η @ 250s⁻¹)], used herein is determined as follows. The individual viscosities, η, are determined at the respective shear rates using a viscometer (e.g., commercially available from TA Instruments, model number AR2000). The measurements can be made with a parallel plate arrangement. First, the center fill composition is loaded onto the rheometer at the temperature at which it would be filled at the candy production facility, the preferred temperature being 85°C, and the parallel plate is applied to the sample. An example of a suitable plate would be a 40mm acrylic plate with a gap of 500 micrometers (µm), where possible it is preferred that a solvent trap is used to avoid loss of water or other solvents from the formula during measurement. The plate is cooled to mucosal membrane temperature (37°C) and the center fill is allowed to equilibrate for 1 hour. The viscosity is measured using rotational shear forces at an exponentially increasing shear rate from about 0.01 s⁻¹ to about 250s⁻¹ over 180 seconds. It is believed that a relatively large gap between cone and bottom plates of the rheometer should be used for this method to avoid misleading viscosity data due to presence of large particles in the formulae (e.g. polymer lumps) or crystals which form during cooling such as recrystallised sucrose. As it is know to one skilled in the art, the gap should be at least 10 times the size of the largest known particles in the product.

The confectionery compositions herein comprise a hard boiled candy shell known to those skilled in the art. Centre-filled hard candies are described in U.S. Pat. No. 4,372,942 and U.S. Pat. No. 4,466,983. A suitable sugar base for a hard candy shell comprises from about 30% to about 85% glucose syrup and from about 15% to about 70% sucrose. Alternatively, a sugar-free base can be used for the shell. Suitable sugar-free bases include bulk sweeteners such as isomalt, maltitol and sorbitol. Isomalt and maltitol are preferred. The inner surface of the shell can also have a separate edible lining to prevent or reduce interaction of the filling with the shell. The edible shell can also further comprise flavours as described above.

An optional, preferred component of the confectionery compositions of the present invention is a cooling composition. An essential component of the cooling composition is a physiological cooling agent. Suitable levels of the cooling agent are from about 0.001 to about 10%, preferably from about 0.01 to about 5%, more preferably from about 0.01 to about 2%, more preferably still from about 0.01 to about 0.5% by weight of the throat drop composition. A test for physiological cooling agents is described in GB-A-1,452,291, published Oct. 13, 1976, is reproduced herein below for convenience.

The following test procedure can be used as a means to identify compounds having a physiological cooling activity. This test is intended purely as a means for identifying compounds having a physiological cooling agent activity and useful in the present invention and for giving an indication of the different relative activities of the compounds, as between themselves and as compared with 1-menthol, when applied in particular manner to a particular part of the body. The results are not necessarily indicative of the activity of these compounds in other formulations and other parts of the body where other factors come into play. For example, a controlling factor in the onset of cooling effect, its intensity and longevity will be the rate of penetration of the compounds through the epidermis and this will vary in different locations on the human body. The formulation of actual products according to this invention will therefore be done largely on an empirical basis although the test results and other figures given herein will be useful as a guide, particularly in the formulation of products for oral administration, since the test procedure to be described involves oral application of the compound. A similar test may, of course, be devised for the purposes of measuring the relative activities of the compounds of another area of the body, for example, the face or forearm, and this will be a useful guide in the choice of compounds to be used in preparations for external topical usage. It will also be noted that the described test procedure is done on a statistical basis. This is necessary since sensitivity to these compounds will vary not only from compound to compound and from one part of the body to another, but also from one individual to another. Tests of this nature are commonly used in the testing of the organoleptic properties e.g. taste and smell of organic and inorganic compounds, see Kirk-Othmer: Encyclopedia of Chemical Technology, 2nd Ed. (1967) Vol. 14, pages 336-344.

The following test procedure is aimed at determining the minimum quantity of the test compound required to produce a noticeable cooling effect in a person of average sensitivity, this minimum quantity being termed the threshold for that particular compound. The tests are carried out on a selected panel of 6 people of median sensitivity to 1-menthol.

To select a test panel of average sensitivity the following procedure is used. Known quantities of 1-menthol in solution in petroleum ether (bp. 40-60 °C.) are placed on 5 mm squares of filter paper, whereafter the solvent is allowed to evaporate. A panel of observers is enrolled and asked to place one impregnated square at a time on the tongue and to report on the presence or absence of a cooling effect. The quantity of 1-menthol on each impregnated square is gradually reduced from a value substantially above 0-25 µg per square to substantially below 0.25 µg the precise range being immaterial. Conveniently, one starts with squares containing 2.0 µg being half that of the preceding square, i.e. the second test square will contain 1.0 µg, the third 0.5 µg, and so on. Each quantity is tested on the tongue at least 10 times. In this way, the thresholds to cold receptor stimulus by 1-menthol are determined for each individual of the panel, the threshold for each individual being that amount of 1-menthol for which, in a series of not less than 10 test applications, a cooling effect is reported 50% of the time. Six panel members are now selected whose threshold to 1-menthol is in the range 0.1 µg to 10 µg and whose average threshold is approximately 0.25 µg, this select panel being regarded as the test panel of average sensitivity.

To test the activity of cooling agents, the above procedure is repeated using only the 6 selected panel members of average sensitivity to 1-menthol. The individual thresholds for each test compound on each of the 6 selected panel members are determined and averaged. Those compounds whose average threshold on the select test panel is 100 µg or less, preferably 50 µg or less are regarded as having cooling activity in accordance with this invention.

Suitable physiological cooling agents are described in W097/06695. Preferred for use herein are physiological cooling agents selected from the group consisting of menthol, peppermint oil, N-substituted-p-menthane-3-carboxamides, acyclic tertiary and secondary carboxamides, 3-1-menthoxy propan-1,2-diol, monomenthyl glutarate and mixtures thereof. The carboxamides found most useful are those described in U.S. Pat. No. 4,136,163, Jan. 23, 1979 to Watson et al., and U.S. Pat. No. 4,230, 688, Oct. 28, 1980 to Rowsell et al. The carboxamides in U.S. Pat. No. 4,136,163 are N-substituted-p-menthane-3-carboxamides, such as N-ethyl-p-menthane-3-carboxamide, commercially available as WS-3 from Wilkinson Sword. The carboxamides of U.S. Pat. No. 4,230,688 are certain acyclic tertiary and secondary carboxamides, such as trimethyl isopropyl butanamide, commercially available as WS-23 from Wilkinson Sword. More preferred for use herein are monomenthyl glutarate, N-ethyl-p-menthane-3-carboxamide, trimethyl isopropyl butanamide and mixtures thereof, more preferably still monomenthyl glutarate, commercially available as Ultracool 2 from EFF (Netherlands),

The balance of the cooling composition may be made up of a suitable appropriate carrier, such as water, propylene glycol or a bulk sweetener, described in more detail below. The cooling composition can further comprise a warming agent as described herein provided that the predominant effect is one of cooling.

A further optional, preferred component of the confectionery compositions herein is a warming composition. An essential component of the warming composition is a physiological warming agent. Suitable levels of the warming agent are from about 0.001 to about 10%, preferably from about 0.005 to about 5%, more preferably from about 0.01 to about 1%, more preferably still from about 0.01 % to about 0.5% by weight of the throat drop.

Physiological warming agents can be tested for using a modification of the test for cooling agents described above, the test being modified to use benzyl alcohol rather than menthol as the reference sample tongue and asking the panellists to report on the presence or absence of a warming effect rather than a cooling effect. Preferred physiological warming agents are those selected from the group consisting of vanillyl alcohol n-butyl ether, vanillyl alcohol n-propyl ether, vanillyl alcohol isopropyl ether, vanillyl alcohol isobutyl ether, vanillyl alcohol n-amino ether, vanillyl alcohol isoamyl ether, vanillyl alcohol n-hexyl ether, vanillyl alcohol methyl ether, vanillyl alcohol ethyl ether, gingerol, shogaol, paradol, zingerone, capsaicin, dihydrocapsaicin, nordihydrocapsaicin, homocapsaicin, homodihydrocapsaicin, ethanol, iso-propyl alcohol, iso-amylalcohol, benzyl alcohol, chloroform, eugenol, cinnamon oil, cinnamic aldehyde, phosphate derivatives thereof, and mixtures thereof. The phosphate derivatives mentioned are those described in WO 97/02273. A commercial example of a suitable warming agent for use herein is Optaheat (Symrise, Germany). The balance of the warming composition may be made up of a suitable appropriate carrier, such as water, propylene glycol or a bulk sweetener, described in more detail below. The warming composition can further comprise a cooling agent as described herein provided that the predominant effect is one of warming.

Preferably, the coolant and warming compositions herein are adapted to provide sequential release profiles. As used herein, adapted to provide sequential release profiles' means that the compositions are chemically and/or physically modified relative to a homogeneous mix of the compositions, in order that the person ingesting the confectionery product can perceive the maximum effect of the cooling agent at a different point in time to the peak sensation of warming. It will be understood that many such compositions will release the warming or cooling agent over the period of ingestion of the product and that there may be some simultaneous perception of warming agent and cooling agent. By positively separating the peak effects of cooling agent and warming agent, however, the overall organoleptic effect of the product is substantially improved versus compositions of the prior art which are not adapted to provide different release profiles. This can conveniently be achieved within a centre-filled confection. In preferred throat drops according to the invention the edible shell is a cooling composition comprising a cooling agent and the centre-fill is a warming composition comprising a warming agent

The confectionery compositions of the present invention may further comprise an active ingredient. Preferred active ingredients for use herein include xanthine derivatives. Xanthine derivatives are useful as stimulants. Xanthine derivatives useful in the present invention include those that conform generally to formula (I): 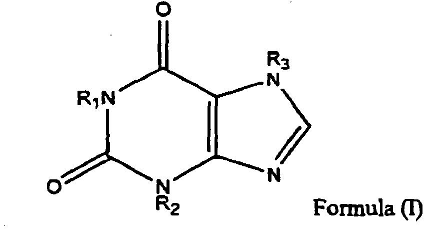 where R₁, R₂ and R₃ are independently selected from H or methyl, salts thereof and mixtures thereof Non-limiting examples of xanthine derivative salts suitable for use herein include citrate, lactate and succinate salts. Preferred xanthine derivatives include:
Xanthine; where R₁, R₂ and R₃ in formula (I) above are all H;
Caffeine; where R₁, R₂ and R₃ in formula (1) above are all methyl;
Theobromine; where R₁ is H and R₂ and R₃ are both methyl; and
Theophylline; where R₁ and R₂ are both methyl and R₃ is H, salts of the aforementioned, and mixtures thereof. More preferably the xanthine derivative comprises caffeine, or salts thereof.

The confectionery compositions of the present invention may preferably comprise from about 0.01% to about 5% xanthine derivative by weight of the composition. Preferably the compositions herein comprise from about 0.05% to about 2.5% xanthine derivative, more preferably from about 0.1% to about 1% xanthine derivative. Preferably the confectionery composition comprises enough xanthine derivative to contain from about 1 mg to about 150 mg of xanthine derivative per individual confectionery unit (i.e. per single throat drop), more preferably from about 5 mg to about 100mg, more preferably still from about 10 mg to about 50 mg xanthine derivative per individual confectionery unit.

The fillings herein can also include a flavouring agent. As used herein, the term flavouring agent means those flavour essences and equivalent synthetic ingredients which are added to the flavour composition for the principal purpose of providing flavour to the confectionery product. It excludes warming and cooling agents as described above. Flavouring agents well known in the confectionery art can be added to the flavour compositions of the invention. These flavouring agents can be chosen from synthetic flavouring liquid and/or oils derived from plants leaves, flowers, fruits and so forth, and combinations thereof. Representative flavouring liquids include: artificial, natural or synthetic fruit flavours such as lemon, orange, banana, grape, lime, apricot and grapefruit oils and fruit essences including apple, strawberry, cherry, orange, pineapple and so forth; bean and nut derived flavours such as coffee, cocoa, cola, peanut, almond and so forth; and root derive flavours such as licorice or ginger. The amount of flavouring agent employed is normally a matter of preference subject to such factors as flavour type, base type and strength desired. In general, amounts up to about 4% by weight are usable with amounts of from about 0.1% to about 1% being preferred.

Fillings can be made by straightforward mixing techniques. The general techniques for manufacturing centre-filled confectionery products can be found in the "Silesia Confiserie Manual No. 3", published by Silesia-Essenzenfabrik Gerhard Hanke K. G., Abt. Fachbucherei.

Centre-filled throat drops according to the invention can be manufactured by deposit, rope-forming and extrusion processes as known in the art. An example of an extrusion process is described in U.S. Pat. No. 5,458,894. An further example of an extrusion process is described in U.S. Pat. No. 5,002,791.

The following examples are given to illustrate the compositions and uses according to the invention. However, the invention is not limited thereto

### Example 1

Pseudoplastic Center fill composition using Xanthan gum and sucrose with Heating agent.

| **Material Description** | **% w/w** |
|---|---|
| GLYCERIN | 55.9750 |
| GLUCOSE SYRUP (80% solids) | 30.0000 |
| SUCROSE | 10.0000 |
| CITRIC ACID ANHYDROUS | 3.0000 |
| XANTHAN GUM | 0.2500 |
| ANTHOCANINS (COLOURANTS) | 0.1500 |
| HEATING AGENT: OPTAHEAT | 0.1500 |
| GUARANA EXTRACT | 0.1250 |
| TAURINE | 0.1000 |
| FLAVOURS | 0.2500 |
| | 100.0000 |

### Manufacturing instructions:

**Step 1** Weigh the Glycerine at room temperature into a suitable vessel
**Step 2** Add the Anthocyanins, Taurine + Guarana powders, mix until dispersed
**Step 3** Add the Xanthan gum, mix until dispersed
**Step 4** Add the Glucose syrup preheated to 40°C, heat the batch whilst mixing to 80°C
**Step 5** Stop heating, add the Sucrose + Citric acid, mix until dissolved
**Step 6** Add the Flavours + Heating agent, mix for 10 minutes

### Example 2

Pseudoplastic Center fill composition using Xanthan gum and a Cooling agent

| **Material Description** | **% w/w** |
|---|---|
| GLYCERIN | 55.9750 |
| HIGH FRUCTOSE GLUCOSE SYRUP (80% solids) | 40.0000 |
| CITRIC ACID ANHYDROUS | 3.0000 |
| XANTHAN GUM | 0.2500 |
| ANTHOCANINS (COLOURANTS) | 0.1500 |
| COOLING AGENT: ULTRACOOL 2 (IFF) | 0.1500 |
| GUARANA EXTRACT | 10.1250 |
| TAURINE | 0.1000 |
| FLAVOURS | 0.2500 |
| | 100.0000 |

### Manufacturing instructions:

**Step 1** Weigh the Glycerine at room temperature into a suitable vessel
**Step 2** Add the Anthocyanins, Taurine + Guarana powders, mix until dispersed
**Step 3** Add the Xanthan gum, mix until dispersed
**Step 4** Add the High fructose Glucose syrup preheated to 40°C, heat the batch whilst mixing to 80°C
**Step 5** Stop heating, add the Citric acid, mix until dissolved
**Step 6** Add the Flavours + Cooling Agent, mix for 10 minutes

### Example 3

Substantially anhydrous pseudoplastic Center fill composition using Xanthan gum.

| **Material Description** | **% w/w** |
|---|---|
| GLYCERIN | 76.08 |
| SUCROSE | 20.00 |
| CITRIC ACID ANHYDROUS | 3.0000 |
| XANTHAN GUM | 0.1500 |
| ANTHOCANINS COLOURANTS) | 0.1500 |
| HEATING AGENT: OPTAHEAT | 0.1500 |
| GUARANA EXTRACT | 0.1250 |
| TAURINE | 0.1000 |
| FLAVOURS | 0.2500 |
| | 100.0000 |

### Manufacturing instructions:

**Step 1,** Weigh the Glycerine at room temperature into a suitable vessel
**Step 2** Add the Anthocyanins, Taurine + Guarana powders, mix until dispersed
**Step 3** Add the Xanthan gum, mix until dispersed
**Step 4** Heat the batch whilst mixing to 80°C, mix until Xanthan gum is fully dissolved.
**Step 5** Stop heating, add the Sucrose + Citric acid, mix until dissolved
**Step 6** Add the Flavours + Heating agent, mix for 10 minutes

### Example 4

A substantially sugar free Pseudoplastic Center fill composition using Xanthan gum.

| **Material Description** | **% w/w** |
|---|---|
| GLYCERIN | 90.91 |
| CITRIC ACID ANHYDROUS | 3.00 |
| WATER DRINKING | 5.00 |
| XANTHAN GUM | 0.2500 |
| ASPARTAME | 0.0500 |
| SUCRALOSE | 0.0200 |
| ANTHOCANINS (COLOURANTS) | 0.1500 |
| HEATING AGENT: OPTAHEAT | 0.1500 |
| GUARANA EXTRACT | 0.1250 |
| TAURINE | 0.1000 |
| FLAVOURS | 0.2500 |
| | 100.0000 |

### Manufacturing instructions:

**Step 1** Weigh the Glycerine at room temperature into a suitable vessel
**Step 2** Add the Anthocyanins, Taurine + Guarana powders, mix until dispersed
**Step 3** Add the Xanthan gum mix until dispersed
**Step 4** Add the Water, heat the batch whilst mixing to 80°C
**Step 5** Stop heating, add the Sucrose + Citric acid, mix until dissolved
**Step 6** Add the Flavours + Heating agent, mix for 10 minutes

Suitable vessels for making the center fill compositions should be made of stainless steel or other food grade acceptable material which can easily be heated and cooled. Ideally the mixing vessels should have scraped wall mixers as well as a medium / high shear mixer. Suitable high shear mixers include static in-line mixers, jet mixers such as those manufactured by Ika GmbH, or rotor stator mixers such as those manufactured by Silverson Inc. Care must be taken when using high shear mixers that the pseudoplastic polymers are not broken into lower molecular weight components.

### Example 5

Hard boiled confectionary shell as used in the manufacture of center filled sugar based candy

| **Material Description** | Before cooking **% w/w** | After cooking **% w/w** |
|---|---|---|
| SUCROSE | 48.4900 | 48.4900 |
| GLUCOSE SYRUP | 58.1653 | 46.5322 |
| WATER DRINKING | 16.0766 | 2.5000 |
| CITRIC ACID ANHYDROUS | 1.2000 | 1,2000 |
| ANHYDROUS CAFFEINE | 0.7781 | 0.7781 |
| COOLING AGENT: ULTRACOOL 2 | 0.3000 | 0.3000 |
| FLAVOUR PREMIX | 0.2000 | 0.2000 |
| | 125.2100 | |
| | **Total** | 100.000 |
| Processing/Moisture/Volatiles Loss | 25.2100 | - |
| **Total** | 100.0000 | 100.0000 |

A preferred method of manufacture of the above confectionary formula is by continuous extrusion process as described in US 5,548,893 and in US 5,002,791. Any of the center fills of examples 1-4 may be suitable for use in this shell formula.

Although the continuous extrusion process allows a high degree of flexibility in the center fill content for the above formula, a preferred target is an average 20% content.

## Claims

1. A confectionary composition comprising from 60% to 95% hard boiled candy shell and from 5% to 40% filling, by weight of the drop, wherein the filling comprises
a. a polar edible liquid; and
b. from 0.001% to 10% thickener by weight of the filling and
c. less than 8% water
wherein the filling composition is shear-thinning

2. The confectionery composition according to claim 1 wherein the filling exhibits a log [(η @ 0.01s⁻¹)/ (η @ 250s⁻¹)] of greater than about 0.5 at 37°C

3. The confectionary composition according to claim 1 or claim 2 wherein the thickener comprises xanthan gum, gellan gum, hydroxypropylmethylcellulose, carboxymethyl cellulose, modified starches, preferably xantham gum.

4. The confectionary composition according to any one of the preceding claims wherein the filling comprises from 40% to 95% polar edible liquid

5. The confectionary composition according to any one of the preceding claims wherein the polar edible liquid comprises water, polyhydric alcohols, low molecular weight alcohols, and mixtures thereof, preferably polyhydric alcohols

6. The confectionary composition according to any one of the preceding claims wherein the composition further comprises a xanthine derivative or mixtures thereof, preferably caffeine.

7. The confectionary composition according to any one of the preceding claims comprising from 0.01% to 10% xanthine derivative, preferably from 0.1% to 5%.

8. The confectionary composition according to any one of the preceding claims further comprising a cooling agent.

9. The confectionary composition according to any one of the preceding claims wherein the composition comprises from 0.001 % to 10% cooling agent.

10. The confectionary composition according to any one of the preceding claims comprising a warming agent

11. The confectionary composition according to any one of the preceding claims wherein the composition comprises from 0.001 to 10% warming agent by weight of the composition.

12. The confectionary composition according to any one of the preceding claims wherein the composition comprises both a cooling agent and warming agent, preferably wherein the cooling agent and warming agent are located in distinct and discrete regions within said composition and said cooling and warming compositions being adapted to provide sequential release profiles.

13. The confectionary composition according to any one of the preceding claims wherein the filling comprises 6% or less water by weight of the filling

## Patentansprüche

1. Süßwarenzusammensetzung, umfassend von 60 Gew.-% bis 95 Gew.-% Hartbonbonhülle und von 5 Gew.-% bis 40 Gew.-% Füllung, bezogen auf das Gewicht des Bonbons, wobei die Füllung Folgendes umfasst
a. eine polare essbare Flüssigkeit; und
b. von 0,001 Gew.-% bis 10 Gew.-% Verdickungsmittel, bezogen auf das Gewicht der Füllung; und
c. zu weniger als 8 % Wasser,
wobei die Füllungszusammensetzung strukturviskos ist.

2. Süßwarenzusammensetzung nach Anspruch 1, wobei die Füllung einen log[(η bei 0,01s⁻¹)/(η bei 250 s⁻¹)] von mehr als ungefähr 0,5 bei 37 °C aufweist.

3. Süßwarenzusammensetzung nach Anspruch 1 oder Anspruch 2, wobei das Verdickungsmittel Xanthangummi, Gellangummi, Hydroxypropylmethylcellulose, Carboxymethylcellulose, modifizierte Stärken, vorzugsweise Xanthangummi, umfasst.

4. Süßwarenzusammensetzung nach einem der vorstehenden Ansprüche, wobei die Füllung von 40 % bis 95 % polare essbare Flüssigkeit umfasst.

5. Süßwarenzusammensetzung nach einem der vorstehenden Ansprüche, wobei die polare essbare Flüssigkeit Wasser, Polyole, niedermolekulare Alkohole und Mischungen davon umfasst, vorzugsweise Polyole.

6. Süßwarenzusammensetzung nach einem der vorstehenden Ansprüche, wobei die Zusammensetzung ferner ein Xanthinderivat oder Mischungen davon umfasst, vorzugsweise Koffein.

7. Süßwarenzusammensetzung nach einem der vorstehenden Ansprüche, umfassend von 0,01 % bis 10 % Xanthinderivat, vorzugsweise von 0,1 % bis 5 %.

8. Süßwarenzusammensetzung nach einem der vorstehenden Ansprüche, die ferner ein Kühlmittel umfasst.

9. Süßwarenzusammensetzung nach einem der vorstehenden Ansprüche, wobei die Zusammensetzung von 0,001 % bis 10 % Kühlmittel umfasst.

10. Süßwarenzusammensetzung nach einem der vorstehenden Ansprüche, die ein Wärmemittel umfasst.

11. Süßwarenzusammensetzung nach einem der vorstehenden Ansprüche, wobei die Zusammensetzung von 0,001 Gew.-% bis 10 Gew.-% Wärmemittel, bezogen auf das Gewicht der Zusammensetzung, umfasst.

12. Süßwarenzusammensetzung nach einem der vorstehenden Ansprüche, wobei die Zusammensetzung sowohl ein Kühlmittel als auch ein Wärmemittel umfasst, wobei sich das Kühlmittel und das Wärmemittel vorzugsweise in unterschiedlichen und gesonderten Bereichen innerhalb der Zusammensetzung befinden und die Kühlmittel- und die Wärmemittelzusammensetzung so angepasst sind, dass sie sequenzielle Freisetzungsprofile bereitstellen.

13. Süßwarenzusammensetzung nach einem der vorstehenden Ansprüche, wobei die Füllung 6 Gew.-% oder weniger Wasser, bezogen auf das Gewicht der Füllung, umfasst

## Revendications

1. Composition de confiserie comprenant de 60 % à 95 % de coque en bonbon dur bouilli et de 5 % à 40 % de remplissage, en poids de la pastille, dans laquelle le remplissage comprend
a. un liquide comestible polaire ; et
b. de 0,001 % à 10 %, d'épaississant en poids du remplissage ; et
c. moins de 8 % d'eau
dans laquelle la composition de remplissage est rhéofluidifiante.

2. Composition de confiserie selon la revendication 1, dans laquelle le remplissage présente un log [(η @ 0,01 s⁻¹)/ (η @ 250 s⁻¹)] supérieur à environ 0,5 à 37°C.

3. Composition de confiserie selon la revendication 1 ou la revendication 2, dans laquelle l'épaississant comprend de la gomme de xanthane, de la gomme gellane, de l'hydroxypropylméthylcellulose, de la carboxyméthylcellulose, des amidons modifiés, de préférence de la gomme de xanthane.

4. Composition de confiserie selon l'une quelconque des revendications précédentes,
dans laquelle le remplissage comprend de 40 % à 95 % de liquide comestible polaire.

5. Composition de confiserie selon l'une quelconque des revendications précédentes,
dans laquelle le liquide comestible polaire comprend de l'eau, des alcools polyhydriques, des alcools de faible masse moléculaire, et leurs mélanges, de préférence des alcools polyhydriques.

6. Composition de confiserie selon l'une quelconque des revendications précédentes, où la composition comprend en outre un dérivé de xanthine ou leurs mélanges, de préférence de la caféine.

7. Composition de confiserie selon l'une quelconque des revendications précédentes comprenant de 0,01 % à 10 % de dérivé de xanthine, de préférence de 0,1 % à 5 %.

8. Composition de confiserie selon l'une quelconque des revendications précédentes comprenant en outre un agent refroidissant.

9. Composition de confiserie selon l'une quelconque des revendications précédentes, où la composition comprend de 0,001 % à 10 % d'agent refroidissant.

10. Composition de confiserie selon l'une quelconque des revendications précédentes comprenant un agent réchauffant.

11. Composition de confiserie selon l'une quelconque des revendications précédentes, où la composition comprend de 0,001 % à 10 % d'agent réchauffant en poids de la composition.

12. Composition de confiserie selon l'une quelconque des revendications précédentes, où la composition comprend à la fois un agent refroidissant et un agent réchauffant, de préférence dans laquelle l'agent refroidissant et l'agent réchauffant sont situés dans des régions distinctes et individuelles au sein de ladite composition et lesdites compositions refroidissantes et réchauffantes étant adaptées pour fournir des profils de libération séquentielle.

13. Composition de confiserie selon l'une quelconque des revendications précédentes, dans laquelle le remplissage comprend 6 % ou moins d'eau en poids du remplissage
